# EUROPEAN PATENT APPLICATION

(11) **EP 2 548 717 A2**
(43) Date of publication of application: **23.01.2013**
(21) Application number: 12176695.0
(22) Date of filing: 17.07.2012
(51) Int. Cl.: B29C 65/38

(54) **Heater for impulse heat sealer**

(30) Priority: 20.07.2011 JP 2011159080; 13.03.2012 JP 2012055991
(71) Applicant: Fuji Impulse Co., Ltd., Toyonaka-shi Osaka 561-0834 (JP)
(72) Inventor: Hashimoto, Yasuo, Toyonaka-shi, Osaka 561-0834 (JP); Hashimoto, Yumi, Toyonaka-shi, Osaka 561-0834 (JP)
(74) Representative: Hannke, Christian

(57) **Abstract**

A heater (11, 12) for an impulse heat sealer for melting a seal portion of an object to be sealed by heating so as to seal the object to be sealed, comprises a braided rope formed by braiding a plurality of thread shape heating elements (111a). The heating element is a metal wire having a diameter of 0.1 to 0.5 mm.

## Description

### BACKGROUND OF THE INVENTION

### Field of the Invention

The present invention relates to a heater for an impulse heat sealer for melting a seal portion of an object to be sealed by heating so as to seal the object to be sealed.

### Description of the Related Art

An impulse heat sealer for nipping and pressing an object to be sealed between a first pressing portion and a second pressing portion, and melting a seal portion of the object to be sealed by heating with a heater so as to seal the object to be sealed is for example disclosed in Japanese Patent No. 3547696. A material of the object to be sealed is a resin film having thickness of about 0.2 mm, and the seal portion can be melted by instantaneously heating with the heater.

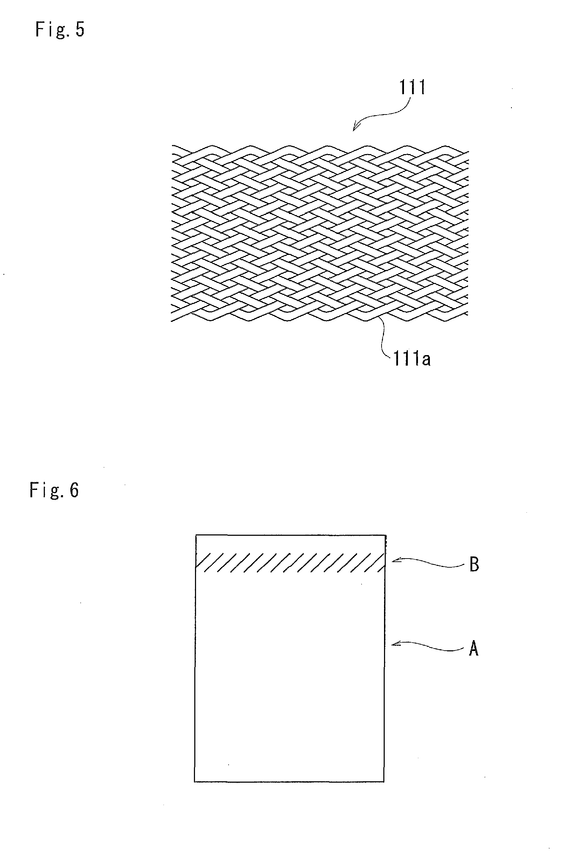

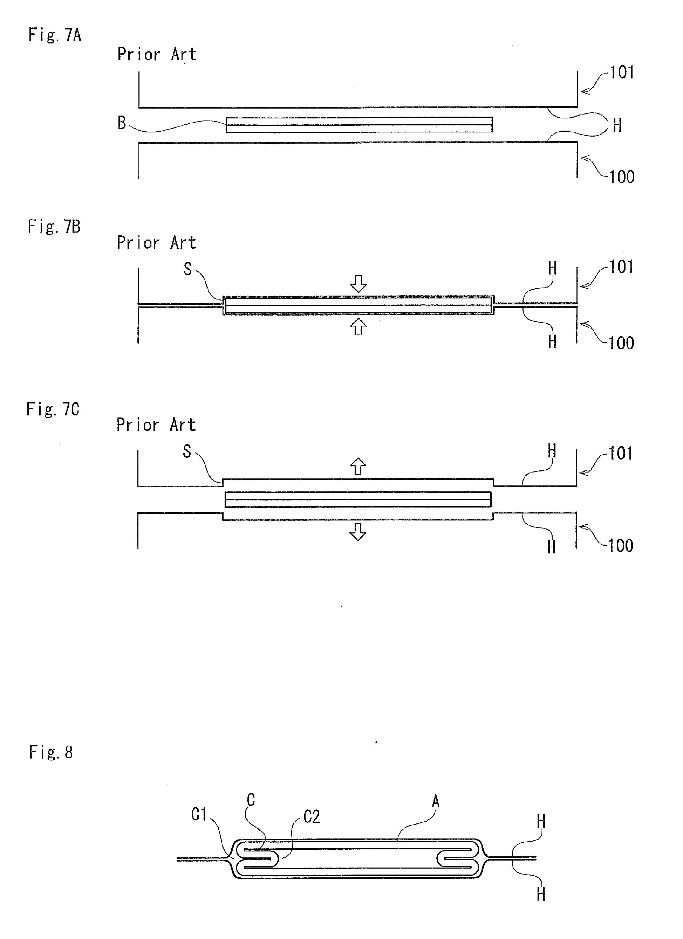

A sealing target of the impulse heat sealer is the thin resin film. However, there is a desire to seal an object to be sealed having thickness of about 1 mm, for example. Figs. 7A to 7C show states that an object to be sealed having large thickness is sealed by the heat sealer. Fig. 6 shows the object to be sealed serving as the sealing target.

As shown in Fig. 6, a seal portion B is set in an upper part of an object to be sealed A. For example, the object to be sealed A is formed in a bag shape, and the seal portion B is sealed in order to close an opening portion provided in the upper part. An appropriate item is accommodated inside the object to be sealed A.

Fig. 7A shows a state before the seal portion B is nipped by a first pressing portion 100 and a second pressing portion 101, and Fig. 7B shows a state that the seal portion B is nipped by the first pressing portion 100 and the second pressing portion 101. Heaters H are respectively provided on pressing surfaces of the pressing portions 100 and 101. By applying electricity to the heaters, the heaters H generate heat, and the seal portion B is melted by heating. The object to be sealed A is for example made of resin, and can be melted and sealed by heating.

In a case where the object to be sealed A having large thickness is to be sealed, in the heater H, a level difference S is generated between a part pressed by the seal portion B and the other parts. Since the normal heater H is formed in a metal flat plate having thickness of about 0.1 to 0.2 mm, as shown in Fig. 7C, the level difference S remains even after a nipping state of the seal portion B is cancelled after completion of sealing. Due to such a level difference S, at the time of sealing the next object to be sealed, the seal portion cannot be uniformly sealed, so that sealing failure is sometimes caused.

In a case where sealing is performed in order to close an opening portion of a bag shape object to be sealed A with a gusset C in an end (so-called gusset bag) as shown in Fig. 8, a part of the gusset C is particularly thicker than other parts. Thus, without flexibility, the heater H cannot deal with a thickness change of the seal portion B, so that there is sometimes a case where the sealing portion B cannot be sufficiently sealed at parts C1 and C2 near the gusset C or the like.

### SUMMARY OF THE INVENTION

The present invention is achieved in consideration with the above situation, and an object thereof is to provide a heater for an impulse heat sealer having flexibility with which deformation does not easily remain even after sealing an object to be sealed.

The object can be achieved by the following present invention. That is, the present invention provides a heater for an impulse heat sealer for melting a seal portion of an object to be sealed by heating so as to seal the object to be sealed, comprises a braided rope formed by braiding a plurality of thread shape heating elements.

An operation and an effect of the heater for the impulse heat sealer having such a configuration will be described. The heat sealer for which this heater is used is an impulse type for melting and sealing the sealing portion by instantaneously heating the heater only when a sealing operation is performed. The heater is the braided rope formed by braiding (lacing) the plurality of thread shape heating elements, and heat is generated by applying electricity to the heating elements. The braided rope can have a high freedom degree of deformation in comparison to a conventionally known heater formed in a line shape, a plate shape, or the like. Thus, the heater of the present invention has flexibility and the deformation does not easily remain even after sealing the object to be sealed.

The object can be achieved by the following present invention. That is, the present invention provides a heater for an impulse heat sealer for melting a seal portion of an object to be sealed by heating so as to seal the object to be sealed, comprises a woven fabric formed by weaving warp and weft made of thread shape heating elements.

An operation and an effect of the heater for the impulse heat sealer having such a configuration will be described. The heat sealer for which this heater is used is an impulse type for melting and sealing the sealing portion by instantaneously heating the heater only when a sealing operation is performed. The heater is the woven fabric formed by weaving warp and weft made of thread shape heating elements, and heat is generated by applying electricity to the heating elements. The woven fabric can have a high freedom degree of deformation in comparison to a conventionally known heater formed in a line shape, a plate shape, or the like. Thus, the heater of the present invention has flexibility and the deformation does not easily remain even after sealing the object to be sealed.

In the above heater, the heating element is preferably a metal wire having a diameter of 0.1 to 0.5 mm. According to this configuration, the heater having sufficient flexibility even when the braided rope or the woven fabric is made of the heating elements can be provided.

In the above heater, the heating element is preferably a carbon fiber bundle formed by bundling a plurality of carbon fibers. Since the carbon fiber itself has flexibility, the heater having sufficient flexibility even when the braided rope or the woven fabric is made of the carbon fiber bundles can be provided.

In the above heater, the braided rope is preferably a flat or round braided rope. The flat or round braided rope is formed by braiding a plurality of thread shape elements in a flat plate shape or a cylindrical shape, and hence has rich flexibility. Thus, the heater having sufficient flexibility can be provided.

### BRIEF DESCRIPTION OF THE DRAWINGS

Fig. 1 is a perspective view of a heater according to the present embodiment;
Fig. 2 is a side view of a heat sealer;
Fig. 3 is a plan view of the heat sealer;
Fig. 4 is a sectional view showing a configuration of pressing portions;
Fig. 5 is a detailed view of a heater main body;
Fig. 6 is a view showing an outer appearance configuration example of an object to be sealed;
Figs. 7A to 7C are front views showing modes of sealing according to a conventional technique;
Fig. 8 is a front view showing another mode of the sealing according to the conventional technique; and
Fig. 9 is a plan view of a heater according to another embodiment.

### DETAILED DESCRIPTION OF THE PREFERRED EMBODIMENTS

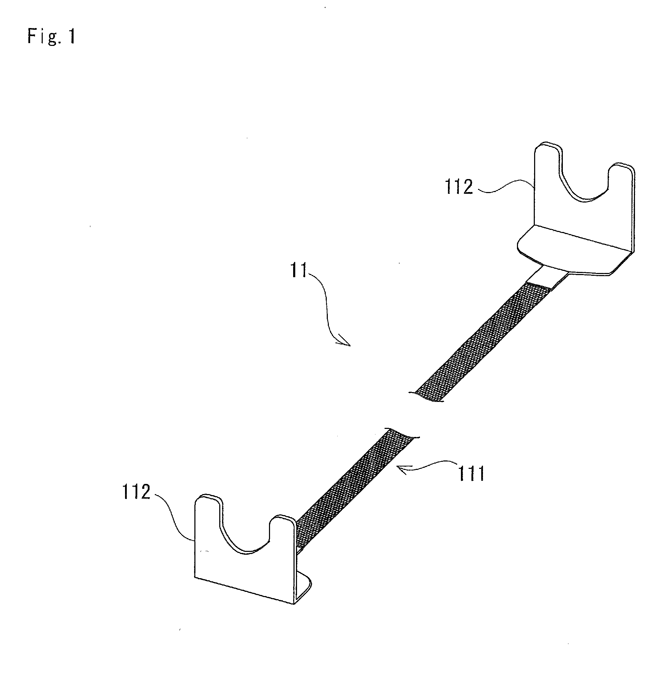

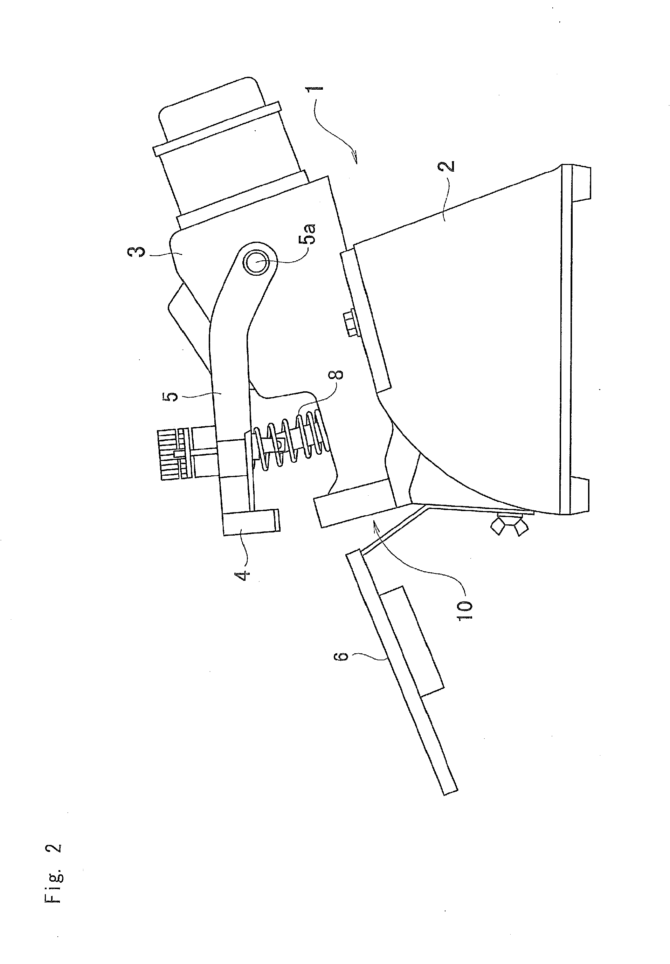

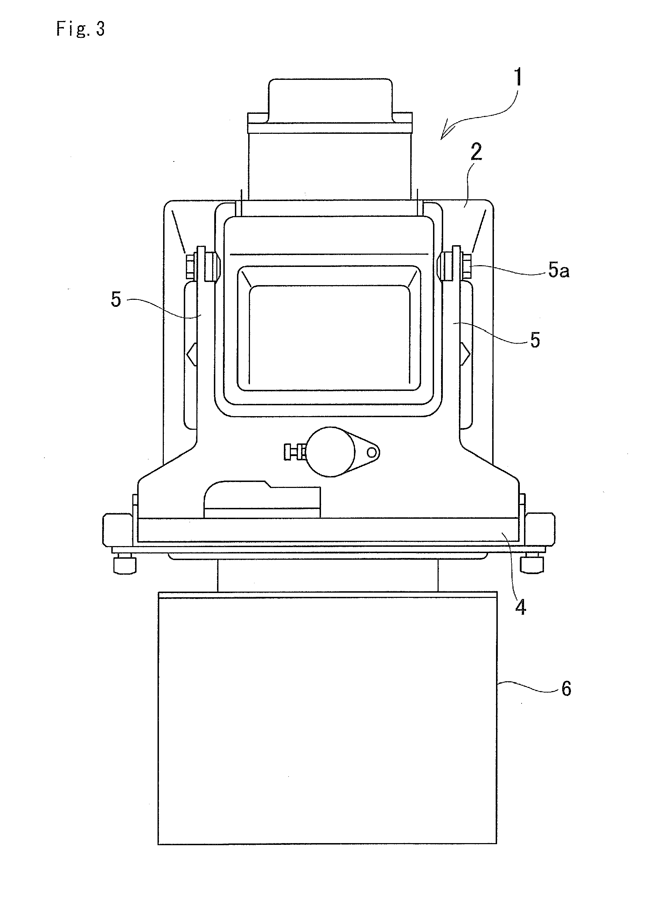

Preferred embodiments of a heater for an impulse heat sealer according to the present invention will be described with using the drawings. Fig. 1 is a perspective view of the heater, Fig. 2 is a side view showing one example of the heat sealer, and Fig. 3 is a plan view showing one example of the heat sealer.

### [Configuration of Heat Sealer]

This heat sealer is formed by providing a heat sealer main body 1 including a lower frame 2 and an upper frame 3, causing the lower frame 2 to support a receiving platform 10 (corresponding to a first pressing portion) for receiving a seal portion of an object to be sealed, causing the upper frame 3 to support a pressure-bonding lever 4 (corresponding to a second pressing portion) for nipping the seal portion with the receiving platform 10 via a pair of left and right arms 5 so that the pressure-bonding lever can be oscillated about a lateral shaft 5a, and providing a table 6 on which the object to be sealed is mounted.

The pressure-bonding lever 4 is oscillated and biased upward by a return spring 8. A solenoid (not shown) for oscillating and driving the pressure-bonding lever 4 downward against bias force of this return spring 8 is provided in the lower frame 2.

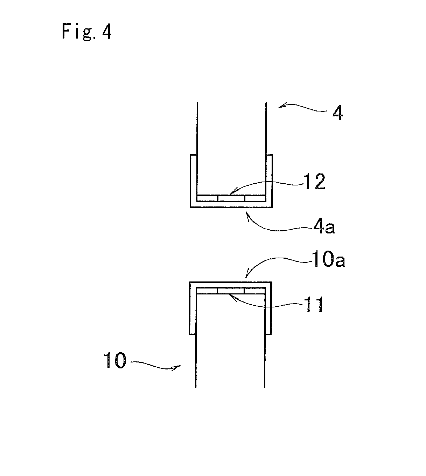

Fig. 4 is a sectional view showing a configuration of the receiving platform 10 and the pressure-bonding lever 4 functioning as the pressing portions. A first pressing surface 10a (mounting surface) is formed on a surface of the receiving platform 10, a second pressing surface 4a is formed on a surface of the pressure-bonding lever 4, and the object to be sealed is nipped and pressed (pressure-bonded) by these pressing surfaces 10a and 4a. On the side of the receiving platform 10 and the pressure-bonding lever 4, a first heater 11 and a second heater 12 are respectively provided and formed in a line form in correspondence to the seal portion B. The heaters 11 and 12 are covered by Teflon® covers (protection covers), and surfaces thereof function as the pressing surfaces 10a and 4a described above. Front ends of the receiving platform 10 and the pressure-bonding lever 4 are made of an elastic material such as silicone rubber. When the object to be sealed is pressure-bonded by the pressing surfaces 10a and 4a, the front ends are elastically deformed along a shape of the object to be sealed. Accordingly, the heaters 11 and 12 can be deformed along the shape of the object to be sealed.

### [Configuration of Heaters]

Since the first heater 11 and the second heater 12 have the same configuration, the first heater 11 will be described below. As shown in Fig. 1, the first heater 11 is formed by a heater main body 111 and attachment portions 112. The heater main body 111 generates heat by applying electricity. The attachment portions 112 are provided on both ends of the heater main body 111, for fixing the first heater 11 to the receiving platform 10 by a screw or the like. It should be noted that a shape of the attachment portions 112 is appropriately designed in accordance with attachment points.

Fig. 5 shows a detail of the heater main body 111. The heater main body 111 of the present embodiment is a braided rope formed by braiding a plurality of thread shape metal wires 111 a (corresponding to heating elements). The heater main body 111 is formed in a band shape as a whole. A known nichrome wire or the like can be used as the metal wire 111 a. A section of the metal wire 111 a is for example a circle having a diameter of 0.1 to 0.5 mm. Thickness of the heater main body 111 is 0.2 to 1.0 mm.

The braided rope is formed by braiding three or more thread shape elements with using a known braiding machine (rope manufacturing machine). A rope manufacturing method includes flat braiding, round braiding, and square braiding, and braided ropes braided by these rope manufacturing methods are respectively called a flat braided rope, a round braided rope, a square braided rope, and the like. For the heater main body 111 of the present invention, a mode of the flat or round braided rope formed by braiding the plurality of thread shape metal wires 111 a in a flat plate shape or a cylindrical shape is preferable. Fig. 5 is one example of the flat braided rope. The heater main body 111 is preferably formed by braiding seven to twenty-three metal wires 111 a, and a braiding angle of the braided rope is preferably 30 to 60 degrees. However, the number of wires and the braiding angle are not limited to this but can be appropriately selected in accordance with a purpose of the heater. The heater main body 111 can also be formed by braiding metal wires 111 a in which one to ten thin metal wires are integrated. Although width of the braided rope, that is, width of the heater main body 111 is determined in accordance with width of the seal portion of the object to be sealed, the width is preferably 2 to 30 mm.

### [Another Embodiment]

The heater main body 111 may be a woven fabric formed by weaving warp and weft made of thread shape heating elements. Plain weave, twill weave, satin weave, and the like exemplify a method of weaving the woven fabric. However, the plain weave is particularly preferable as the heater main body 111 having substantially fixed thickness can be relatively easily manufactured. The plain weave is a method of weaving by making weft and warp alternately go up and down.

The heating element forming the braided rope or the woven fabric may be a carbon fiber bundle formed by bundling a plurality of carbon fibers.

In the above embodiment, the heaters are provided both in the receiving platform 10 and the pressure-bonding lever 4. However, the heater may be provided in only one of them. The impulse heat sealer described above is one example, and the heater of the present invention can be used for various impulse heat sealers.

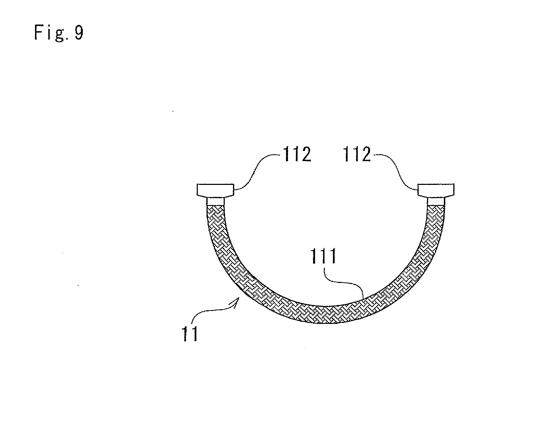

In the above embodiment, the example that the heater 11 is used while the band shape heater main body 111 is arranged in a straight form is shown. However, since the heater 11 according to the present invention has flexibility in the three-dimensional directions, the heater 11 can be used in various modes. For example, the heater 11 can also be used while the band shape heater main body 111 is arranged in an arc form on a plane as in Fig. 9 or arranged in a circular form. At this time, the heater main body 111 is covered by the Teflon® cover (protection cover). Further, the heater 11 according to the present invention can be not only used in a planar form but also used in a three-dimensional form.

In a case where a shape of the heater 11 is to be maintained such as a case where the heater 11 is used in a three-dimensional form, the heater 11 can also be impregnated with heat-resistant resin such as a polyimide.

## Claims

1. A heater for an impulse heat sealer for melting a seal portion of an object to be sealed by heating so as to seal the object to be sealed, comprising:
a braided rope formed by braiding a plurality of thread shape heating elements or a woven fabric formed by weaving warp and weft made of thread shape heating elements.

2. The heater according to claim 1, wherein
the heating element is a metal wire having a diameter of 0.1 to 0.5 mm.

3. The heater according to claim 1 or 2, wherein
the heating element is a carbon fiber bundle formed by bundling a plurality of carbon fibers.

4. The heater according to claim 1, wherein
the braided rope is a flat or round braided rope.
